# EUROPEAN PATENT APPLICATION

(11) **EP 3 128 295 A1**
(43) Date of publication of application: **08.02.2017**
(21) Application number: 15773060.7
(22) Date of filing: 31.03.2015
(51) Int. Cl.: G01D 5/347, G01D 5/38

(54) **REFLECTIVE ENCODER**

(30) Priority: 31.03.2014 JP 2014071757
(71) Applicant: Namiki Seimitsu Houseki Kabushiki Kaisha, Adachi-ku, Tokyo 123-8511 (JP); Adamant Kabushiki Kaisha, Tokyo 123-8595 (JP); Sawada, Renshi, Fukuoka-shi, Fukuoka 819-0385 (JP)
(72) Inventor: SAWADA Renshi, Fukuoka-shi Fukuoka 819-0385 (JP); TAKESHITA Toshihiro, Fukuoka-shi Fukuoka 812-8581 (JP); IWASAKI Takuma, Fukuoka-shi Fukuoka 812-8581 (JP); ISHIKAWA Masanori, Tokyo 123-8511 (JP); OKAMOTO Chihiro, Kuroishi-shi Aomori 036-0539 (JP); AOYAGI Tomohide, Tokyo 123-8595 (JP)
(74) Representative: Schwabe - Sandmair - Marx
(86) International application number: PCT/JP2015/060123
(87) International publication number: WO 2015/152242

(57) **Abstract**

Disclosed is a reflective encoder which is capable of measuring movement amount and detecting movement direction by using one emergent light beam, and achieving high reliability and miniaturization through a simple structure. In the reflective encoder, a light beam emitted by a laser oscillator is caused to be incident on a reflective diffraction grating disposed on a side of a scale, and diffracted light beams reflected by the reflective diffraction grating are received by light receiving elements. An interference optical system is provided between the light receiving elements and the reflective diffraction grating. An optical system is thus constructed to measure movement amount and detect movement direction by using only one emergent light beam.

## Description

### Technical Field

The present disclosure relates to a reflective encoder. Light receiving elements of the encoder receive light reflected by a scale of the encoder with the movement of the scale, so as to measure the displacement of the scale.

### Technical Background

Currently, in a stepper motor of an industrial robot, an optical encoder with high resolution is typically used to accurately measure the rotation angle of the motor. These encoders are divided into transmissive encoders and reflective encoders according to the structures thereof. In a transmissive encoder, the scale is provided thereon with slits which can result in changes of an emergent light beam, and displacement of the scale is measured based on the changes of the emergent light beam incident on a light receiving element disposed opposite to the scale. In a reflective encoder, a light beam reflected by a reflector disposed on a scale and an emergent light beam are caused to be on a same side, and the reflected light beam is caused to be incident on a light receiving element, whereby displacement of the scale is measured. In the field of industrial robots, reflective encoders are mainly used in components such as manipulator requiring miniaturization. Typical representatives of miniature and high-resolution encoders are encoders disclosed by JP05-215515A (hereafter referred to as patent document 1) and JP 4008893 (hereafter referred to as patent document 2) which each have already been granted a patent right.

In the above two patent documents, the encoder disclosed by patent document 1 is characterized by the use of a reflective diffraction grating as the scale and use of a transversely arranged semi-conductor laser as the source of emergent light. In the encoder disclosed by patent document 1, light emitted from two ends of the semi-conductor laser can be used to measure displacement of a plurality of scales. In the encoder disclosed by patent document 2, the same basic configuration is adopted, and a semi-conductor laser is configured to enable light emitted therefrom to have a constant light strength, whereby diffracted light with high accuracy can be obtained based on the movement of the scale.

### Prior Arts

### Patent Documents

Patent document 1: JP05-215515A
Patent document 2: JP4008893

### Summary of the Invention

### Problems to Be Solved by the Present Disclosure

The existing technologies disclosed by the above two patent documents have their own technical features and technical effects, but neither of them can measure the movement amount and detect the movement direction by using only one light beam. In these two existing technologies, the reflective diffraction grating used as the scale has to be configured in two channels. Therefore, when a rotary encoder adopts the above structure, it, due to a circumferential difference between the inner channel and the outer channel, will have the problem that an upper value of resolution thereof will be determined by the relatively narrow pitch (i.e., center-to-center distance between two adjacent slits) of the inner channel, rather than by the relatively wide pitch of the outer channel.

Furthermore, in the reflective encoders disclosed by patent documents 1 and 2, the reflector for reflecting light emitted by the semi-conductor laser is formed from monocrystal silicon mostly through anisotropic etching. Therefore, in most of the reflective encoders disclosed by patent documents 1 and 2, the angle of reflection is determined by an angle defined by the crystal orientation. This may lead to problems that a pitch of the reflective diffraction grating as the scale will be determined by a corresponding pitch of the reflection angle, and a distance between the detecting elements and the diffraction grating on the moving portion will also be determined by the reflection angle defined, thus reducing the freedom to design. The reflective encoders also have the following problems. Because the interference for detecting the movement of the diffraction grating based on the change of the distance between the detecting elements and the diffraction grating on the moving portion also changes, the encoder in practical use will fail to adapt to the change of said distance, whereby the accuracy of the measurement will be decreased. In addition, considering the above structure, it is defined that the part of the component (on which the encoder is arranged) to be measured should be fixed with high accuracy without any shaking. Moreover, the implementation of the above existing reflective encoders is based on a complex wiring system and a three-dimensional configuration, which requires sophisticated techniques, and cannot meet the requirement for miniaturization of components such manipulator.

Directed against the above problem, the present disclosure aims to provide a reflective encoder which is capable of measuring the movement amount and detecting the movement direction by means of one light beam, and achieving high reliability and miniaturization through simple structure thereof.

### Technical Solutions for Solving the Problems

To achieve the above objective, a first embodiment of the present disclosure provides a reflective encoder which comprises light receiving elements, and a diffraction grating disposed opposite to the light receiving elements and moving horizontally with respect to surfaces of the light receiving elements with movement or rotation of a scale, wherein the light emitted from a laser oscillator and shining towards the diffraction grating can fall on the light receiving element after being reflected by the diffraction grating, characterized in that an interference optical system is provided between the light receiving elements and the diffraction grating. Specifically, the encoder provided by the present disclosure is characterized in that, the interference optical system is used to enable two diffracted light beams reflected by the reflective diffraction grating disposed on a side of the scale to have a phase difference therebetween, and enable the diffracted light beams and the emergent light to interfere with each other.

According to a second embodiment of the present disclosure, the interference optical system comprises a component including a plurality of diffraction gratings.

### Technical Effects

The reflective encoder provided by the present disclosure is capable of measuring movement amount and detecting movement direction by means of one light beam, and achieving miniaturization through simple structure thereof. These technical effects are achieved by providing the interference optical system between the light receiving elements and the diffraction grating. In other words, the interference optical system used in the reflective encoder of the present disclosure can cause the two diffracted light beams reflected by the reflective diffraction grating to have a phase difference therebetween. By enabling the two diffracted light beams reflected by the reflective diffraction grating to have a phase difference therebetween, and by enabling the two diffracted light beams out of phase to interfere with the emergent light, the encoder provided by the present disclosure is capable of measuring movement amount and detecting movement direction by using one light beam.

More specifically, the reflective encoder provided by the present disclosure is configured as follows. By providing the interference optical system between the light receiving elements and the diffraction grating, the two diffracted light beams reflected by the reflective diffraction grating are caused to have a phase difference therebetween, and the diffracted light beams and the emergent light from the light source are caused to interfere with each other, whereby the movement amount and movement direction are measured by means of a single light source and the reflective diffraction grating. Regarding the light beam shining towards the reflective diffraction grating, by turning the emergent light into a parallel light beam through the optical lens, and enabling the parallel light beam to be incident vertically on the reflective diffraction grating, the distance limit defined by the pitch of the diffraction grating can be eliminated, which allows more freedom to design the encoder on the condition that the diffracted light from the reflective diffraction grating can be incident on the light receiving elements, and that the reflective encoder can function normally.

In addition, according to the above structure, the reflective encoder of the present disclosure is provided with only one light beam that shines towards the reflective diffraction grating, and the reflective diffraction grating disposed on the scale is configured in one channel only. In this manner, the structure of the existing reflective encoders will be simplified, which can further help to realizing the miniaturization of the reflective encoder and the motor and other actuators on which the reflective encoder is arranged. Moreover, by providing the reflective encoder of the present disclosure with only one light beam that shines towards the reflective diffraction grating, the incident light can be vertically incident on the diffraction grating, which can solve the problem that reliability of the encoder can be reduced due to adoption of reflectors formed by anisotropic etching.

Furthermore, according to the second embodiment of the present disclosure, a small number of elements are used to achieve an accurate interference between the diffracted light beams and the emergent light from the light source, the diffracted light beams having a phase difference different from the interference optical system.

As described above, by adopting the structure disclosed in the present disclosure, a new reflective encoder is obtained. The reflective encoder can measure the movement amount and detect the movement direction by using only one light beam, and can realize relatively high reliability and miniaturization through a simple structure.

### Brief Description of the Drawings

Fig. 1 is a perspective view of a reflective encoder according to the embodiment of the present disclosure;
Fig. 2 shows light paths of the reflective encoder shown in Fig. 1;
Fig. 3 shows basic light paths of the reflective encoder shown in Fig. 1;
Fig. 4 shows light paths related to monitor signal of the reflective encoder shown in Fig. 1;
Fig. 5 shows light paths related to Z signal of the reflective encoder shown in Fig. 1; and
Fig. 6 is a side view of the reflective encoder for illustrating the rationale of the reflective encoder.

### Detailed Description of the Embodiments

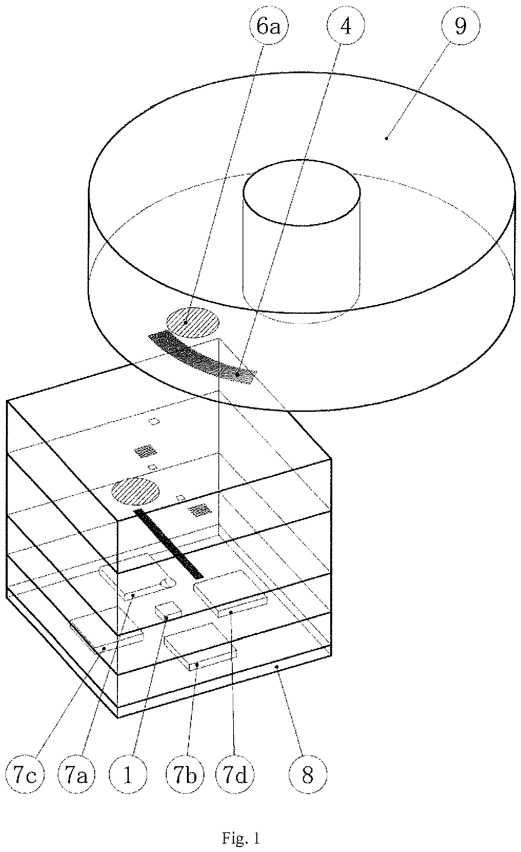

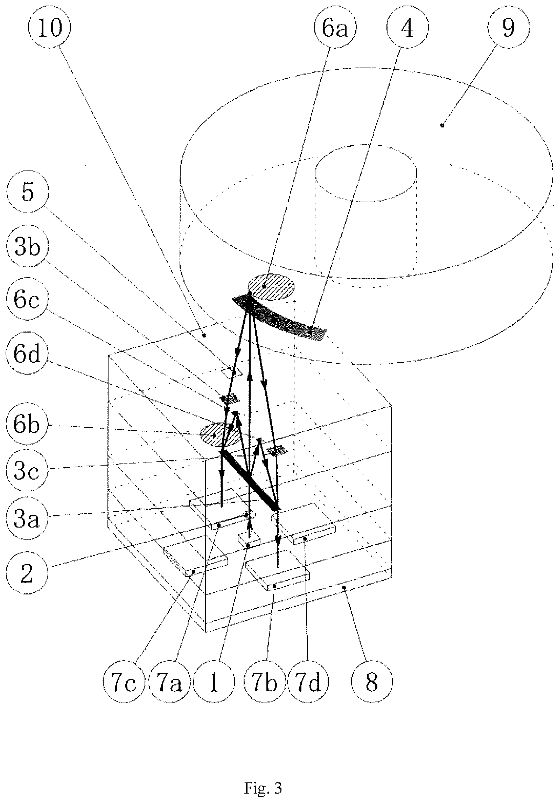

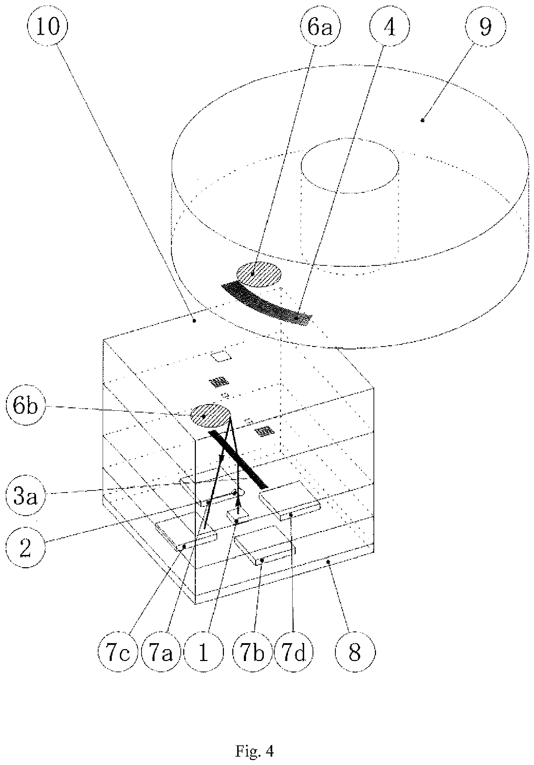

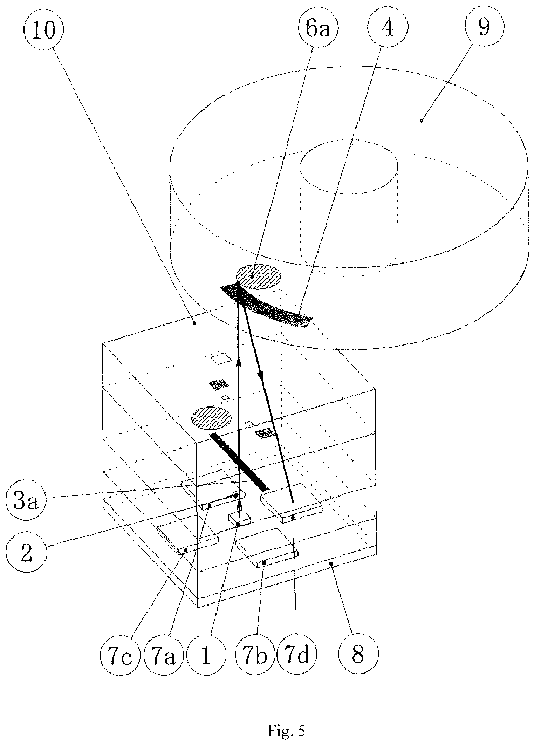

Preferable embodiments of the present disclosure are described in the following with reference to Figs. 1 to 6, in which same elements are indicated with a same reference sign.

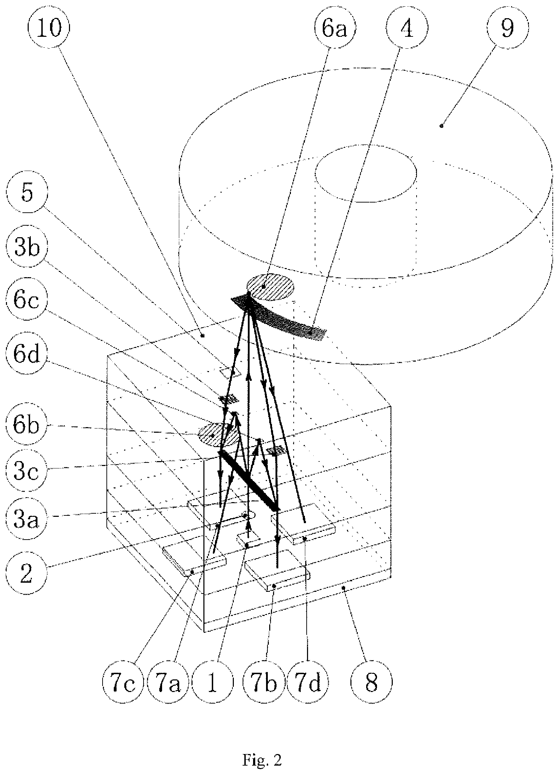

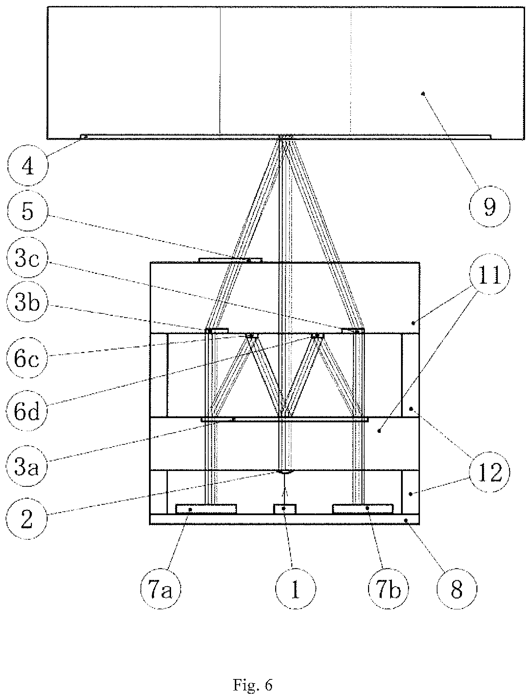

Fig. 1 shows a perspective view of a reflective encoder according to the embodiment of the present disclosure. Figs. 2 to 5 show all light paths of the reflective encoder and each light path of the reflective encoder respectively. Fig. 6 is a side view of the reflective encoder for illustrating the rationale of the reflective encoder. Circuits of all elements, and specific structures of the scale 9 acting as a rotor, supporting elements of the encoder, and an overall view of the reflective diffraction grating 4 disposed on the scale, are not shown in the Figures.

As shown in Figs. 1 to 3, the reflective encoder provided in the present embodiment is configured as follows. A semi-conductor laser 1 and four light receiving elements 7a, 7b, 7c, 7d are provided on a sub-mount 8. A reflective diffraction grating 4 and a reflector 6a are provided on a disc-like scale 9 which acts as a rotor. The receiving elements and the scale 9 are provided therebetween with an interference optical system 10 which comprises an optical lens 2, transmissive diffraction gratings 3a, 3b, 3c, phase shifter 5, and reflectors 6b, 6c. The reflective diffraction grating 4 forms a circle, and only a small part of the circle is shown in the Figures.

As shown in Figs. 2, 3, and 6, the present embodiment is configured as follows. Light emitted from the semi-conductor laser 1 is turned into a parallel light beam by the optical lens 2, so that a central once-diffracted light beam of three once-diffracted light beams passing through the transmissive diffraction grating 3a is incident on the reflective diffraction grating 4 and the reflector 6a on the scale 9. As shown in Fig. 2, part of the left once-diffracted light beam passing through the transmissive diffraction grating 3a is reflected by the reflector 6b to become incident on the light receiving element 7c, thereby serving as a monitor signal. The rest of the non-reflected once-diffracted light beam is reflected by the reflector 6c to become incident on the transmissive diffraction grating 3a. As shown in Fig. 6, the right once-diffracted light beam is reflected by the reflector 6d to, like the left light beam, become incident on the transmissive diffraction grating 3a.

Figs. 2, 3, and 6 show light paths of light from the reflective diffraction grating 4 on the scale 9 towards the light receiving elements. In the present embodiment, of two twice-diffracted light beams reflected by the reflective diffraction grating 4, one twice-diffracted light beam, after a 90-degree shift in phase caused by the phase shifter 5, passes through the transmissive diffraction grating 3b, becomes again incident on the transmissive diffraction grating 3a, and then becomes incident on the light receiving element 7a after being interfered by the once-diffracted light beam reflected by the reflector 6c; the other twice-diffracted light beam passes through the transmissive diffraction grating 3c, becomes again incident on the transmissive diffraction grating 3a, and then becomes incident on the light receiving element 7b after being interfered by the once-diffracted light beam reflected by the reflector 6d. In this way, a rotation amount and a rotation direction of the scale 9 can be obtained based on output of the light receiving elements 7a and 7b.

With such a structure, the reflective encoder of the present embodiment can measure both the rotation amount and rotation direction by using one emergent light beam, thus achieving relatively high reliability through a simple structure and realizing miniaturization. That is, in the present embodiment, there is only one light beam incident on the scale 9. Consequently, the reflective diffraction grating 4 disposed on the scale 9 is formed only in one channel, and hence there will be no such an issue as aforementioned that an upper value of the resolution of the encoder will be determined by the relatively narrow pitch of the inner channel. The displacement amount of the scale 9 can thus be measured.

In addition, as shown in Figs. 2, 4, and 5, in the present embodiment, the scale 9 and the interference optical system 10 are provided thereon with the reflector 6a and the reflector 6b, respectively, which reflect only a part of the incident light beam. Specifically, the once-diffracted light beam reflected by the reflector 6b is incident on the light receiving element 7c, and the once-diffracted light beam reflected by the reflector 6a is incident on the light receiving element 7d. In this case, signal from the reflector 6b is sent to the light receiving element 7c by the action of the semi-conductor laser 1, and signal from the reflector 6a is sent to the light receiving element 7d each time when the scale 9 completes a full-circle rotation, namely a cycle. Therefore, in the present embodiment, the action information can be confirmed by the monitor signal obtained from the light receiving element 7c and the number of rotation cycles detected by Z signal obtained from the light receiving element 7d can be counted, while measurement of the displacement can be guaranteed.

In the present embodiment, all optical elements are provided on substrates 11, and the interference optical system is constructed, with the support of the substrates 11, on a spacer 12 serving as a side wall. When it comes to the configuration of these optical elements, because, theoretically, self-aligning of the optical system can be done by merely adjusting the positions of the elements two-dimensionally, it is easy to construct the optical system. Moreover, in the present embodiment, the semi-conductor laser 1 as a light emitting element and the light receiving elements 7a, 7b, 7c, and 7d are all configured on a same layer. It is hence unnecessary to provide three-dimension wiring in the present embodiment, which enables it possible to form the optical system and the circuitry with simple structures.

Furthermore, as shown in Fig. 6, in the present embodiment, after the light emitted by the semi-conductor laser 1 serving as a light emitting element is turned into a parallel light beam by the optical lens 2, it shines vertically on the reflective diffraction grating 4. Therefore, in the encoder provided by the present disclosure, no limitation is imposed on the distance between the detecting elements (i.e., the light receiving elements 7a, 7b, 7c, 7d) and the diffraction grating (i.e., the reflective diffraction grating 4) on the moving portion, which allows more freedom to design the encoder on the condition that the diffracted light can be incident on the light receiving elements 7a, 7b, 7c, 7d and that the reflective encoder can function normally.

To conclude, the reflective encoder provided by the present disclosure is capable of measuring the movement amount and detecting the movement direction of the scale by using one light beam, and achieving high reliability and miniaturization through a simple structure.

### List of Reference Signs

- 1: semi-conductor laser
- 2: optical lens
- 3a, 3b, 3c: transmissive diffraction grating
- 4: reflective diffraction grating
- 5: phase shifter
- 6a, 6b, 6c, 6d: reflector
- 7a, 7b, 7c, 7d: light receiving element
- 8: sub-mount
- 9: scale
- 10: interference optical system
- 11: substrate
- 12: spacer

## Claims

1. A reflective encoder, comprising:
light receiving elements, and
a diffraction grating disposed opposite to the light receiving elements and moving horizontally with respect to surfaces of the light receiving elements with movement or rotation of a scale, wherein the light emitted from a laser oscillator and shining towards the diffraction grating can fall on the light receiving elements after being reflected by the diffraction grating,
wherein an interference optical system are provided between the light receiving elements and the diffraction grating.

2. The reflective encoder according to claim 1, wherein the interference optical system comprises a component including a plurality of diffraction gratings.
